# EUROPEAN PATENT APPLICATION

(11) **EP 4 553 043 A1**
(43) Date of publication of application: **14.05.2025**
(21) Application number: 23220716.7
(22) Date of filing: 29.12.2023
(51) Int. Cl.: C01D 15/02, H01M 4/04

(54) **PREPARATION METHOD FOR LITHIUM OXIDE MATERIAL, AND LITHIUM OXIDE MATERIAL**

(30) Priority: 10.11.2023 CN 202311513395
(71) Applicant: HUBEI RT ADVANCED MATERIALS GROUP COMPANY LIMITED, Daye City Huangshi, Hubei 435100 (CN)
(72) Inventor: Sun, Jie, Huangshi, 435100 (CN); Cheng, Guangchun, Huangshi, 435100 (CN); Chen, Shiqi, Huangshi, 435100 (CN); He, Zhonglin, Huangshi, 435100 (CN); He, Jianhao, Huangshi, 435100 (CN)
(74) Representative: Cleanthous, Marinos

(57) **Abstract**

Provided is a preparation method for a lithium oxide material, including the following steps: mixing lithium carbonate, a carbon source and a dispersant according to a certain proportion, stirring and dispersing and carrying out wet grinding to obtain an intermediate solution; carrying out spray drying on the intermediate solution to obtain an intermediate, and sintering and pulverizing the intermediate under a protection atmosphere to obtain a lithium oxide material. The prepared lithium oxide is uniform in particle and high in purity. The technical process is simple, and suitable for large-scale industrial production. A prepared lithium oxide material is also provided.

## Description

### TECHNICAL FIELD

The present disclosure relates to the technical field of batteries, and in particular to a preparation method for a lithium oxide material, and a lithium oxide material prepared by the preparation method.

### BACKGROUND

As the representative of second-generation batteries with the best comprehensive performance at present, the commercialization of lithium-ion batteries can be traced back to the 1990s at the earliest. Lithium iron phosphate and lithium iron manganese phosphate materials, after years of research, have become a better technical route in the field of lithium-ion batteries.

Lithium oxide material is an important raw material for the lithium-ion battery material. In the existing preparation process, for example, lithium oxide is obtained by burning lithium metal, but lithium metal needs to be produced by molten salt electrolysis, which is costly and uneconomical. In the liquid phase method, lithium hydroxide is oxidized with high concentration hydrogen peroxide to obtain lithium peroxide, and then lithium peroxide is subjected to thermal decomposition to obtain lithium oxide, which has high requirements for equipment, safety risks, and high requirements for the purity and size of raw materials. There is lack of a lithium oxide preparation method with simple process and economic cost at present.

### SUMMARY

In view of above contents, the present disclosure is intended to at least solve one of the technical problems in the prior art. To this end, the present disclosure provides a preparation method for a lithium oxide material, and a lithium oxide material. Based on carbothermal reduction of lithium carbonate, a carbon source and a lithium carbonate are ground in liquid phase to obtain lithium source slurry, and then the lithium source slurry is subjected to spray drying, calcination and post-treatment to prepare lithium oxide. The lithium oxide material is high in purity and uniform in particle. Meanwhile, the technical process of the preparation method for the lithium oxide material is simple, and suitable for large-scale industrial production.

To this end, in a first aspect, a preparation method for a lithium oxide material is provided by an embodiment of the present disclosure. The preparation method includes the following steps:

S10: mixing lithium carbonate, a carbon source and a dispersant according to a certain proportion, stirring and dispersing and carrying out wet-grinding to obtain an intermediate solution;

S20: carrying out spray drying on the intermediate solution to obtain an intermediate; and

S30: sintering and pulverizing the intermediate under a protection atmosphere to obtain the lithium oxide material.

Alternatively, the carbon source includes an inorganic carbon source, and an organic carbon source.

Preferably, the inorganic carbon source includes at least one of conductive carbon black, Super P, Ketjen black, carbon nanotubes, acetylene black, vapor-grown carbon fiber, graphene, and biomass carbon. The organic carbon source includes at least one of glucose, sucrose, starch, fructose, maltose, cyclodextrin, citric acid, polyethylene glycol, polyvinyl alcohol, and polyglycerol.

Preferably, the dispersant includes one of deionized water, and anhydrous ethanol.

Preferably, a grinding particle size D50 of the wet grinding is 0.1 µm to 1.0 µm.

Preferably, in the spray drying process, the spray is conducted with an air inlet temperature of 200-280°C, and an air outlet temperature of 90-120°C.

Preferably, the protection atmosphere includes one of a noble gas atmosphere, and a vacuum atmosphere.

Preferably, the noble gas atmosphere includes at least one of nitrogen and argon.

Preferably, in the sintering process, a sintering temperature is 700°C-1200°C, and sintering time is 6 h-48 h.

In a second aspect, a lithium oxide material is provided by an embodiment of the present disclosure. The lithium oxide material is prepared by the preparation method of the first aspect.

According to the preparation method for the lithium oxide material provided by the embodiments of the present disclosure, based on carbothermal reduction of lithium carbonate, a carbon source and a lithium carbonate are ground in liquid phase to obtain lithium source slurry, and then the lithium source slurry is subjected to spray drying, calcination and post-treatment to prepare lithium oxide. The lithium oxide material is high in purity and uniform in particle. In addition, the process route adopted by the method is similar to the existing lithium iron phosphate process route, and the required equipment is basically the same, such that the equipment requirements of the process is further reduced. The technical process of the preparation method for the lithium oxide material is simple, low in equipment requirement, and suitable for large-scale industrial production.

### BRIEF DESCRIPTION OF THE DRAWINGS

FIG. 1 is a flow diagram of a preparation method for a lithium oxide material according to an embodiment of the present disclosure.
FIG. 2 is an XRD (X-Ray Diffraction) pattern of a lithium oxide material according to Embodiments 1-4 and Comparative examples 1-3 of the present disclosure.

### DETAILED DESCRIPTION OF THE EMBODIMENTS

The embodiments of the present disclosure are described in detail below. Examples of the embodiments are shown in the accompanying drawings, and the same or similar numbers throughout this specification represent the same or similar elements or elements having the same or similar functions. The embodiments described below in conjunction with the drawings are illustrative, and are intended to illustrate the present disclosure, and cannot be construed as the limitations of the present disclosure.

The following disclosure provides many different embodiments or examples for implementing different structures of the present disclosure. To simplify the present disclosure, components and arrangements of particular examples are described below. Certainly, the components and arrangements are only examples and are not intended to limit the present disclosure. In addition, reference numerals and/or letters may be repeated in different examples according to the present disclosure. Such a repetition is for simplicity and clarity, and does not in itself indicate the relationship between the various embodiments and/or arrangements discussed. Furthermore, the present disclosure provides examples of various specific processes and materials, but those of ordinary skill in the art can realize the applicability of other processes and/or the use of other materials.

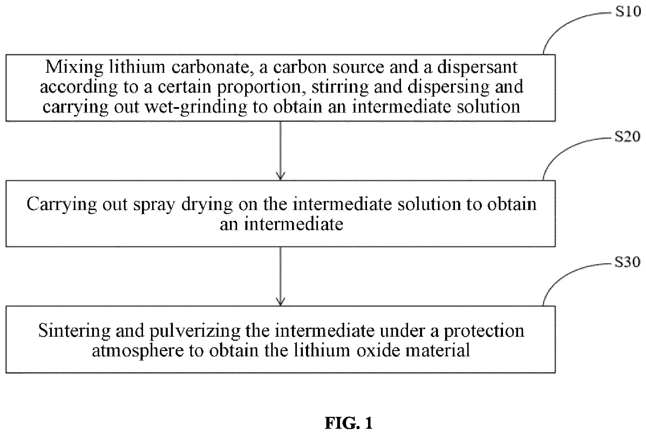

Please referring to FIG. 1, in a first aspect, a preparation method for a lithium oxide material is provided by an embodiment of the present disclosure. The preparation method includes the following steps:

S10. Lithium carbonate, a carbon source and a dispersant are mixed according to a certain proportion, and then are stirred and dispersed and subjected to wet-grinding to obtain an intermediate solution.

S20. The intermediate solution is subjected to spray draying to obtain an intermediate.

S30. The intermediate is sintered and pulverized under a protection atmosphere to obtain the lithium oxide material.

Specifically, in this embodiment, based on carbothermal reduction of lithium carbonate, the carbon generated by the decomposition of the carbon source reacts with lithium carbonate at high temperature to generated lithium oxide, the required raw materials only include lithium carbonate and carbon source, and there is no need of additional raw materials. Correspondingly, no other products are produced, and thus a complicated post-treatment process is not needed.

Further, the carbon source includes an inorganic carbon source, and an organic carbon source.

In this embodiment, the used carbon source is a composite carbon source, the inorganic carbon source, and a small molecular organic carbon source. The advantages are that the inorganic carbon source can be used as a reducing agent to participate in high-temperature thermal reduction of the lithium carbonate in large quantities, and the small molecular organic carbon source can generate a large amount of gas after high-temperature decomposition, which may promote the full reduction of lithium carbonate.

It may be understood that if a single inorganic carbon source is used, the problem of insufficient reaction caused by incomplete contact of the lithium carbonate and carbon source may be caused. In addition, if the organic carbon source is separately used, due to low residual carbon rate of the organic carbon source and high demand for organic carbon source, there may be a problem of high viscosity of slurry during grinding. In addition, a large amount of gas may be produced during sintering, affecting the preparation of materials.

Further, the inorganic carbon source includes at least one of conductive carbon black, Super P, Ketjen black, carbon nanotubes, acetylene black, vapor-grown carbon fiber, graphene, and biomass carbon. The organic carbon source includes at least one of glucose, sucrose, starch, fructose, maltose, cyclodextrin, citric acid, polyethylene glycol, polyvinyl alcohol, and polyglycerol.

Further, the dispersant includes one of deionized water, and anhydrous ethanol.

Further, a grinding particle size D50 of the wet grinding is 0.1 µm to 1.0 µm.

Further, in the spray drying process, the spray is conducted with an air inlet temperature of 200-280°C, and an air outlet temperature of 90-120°C.

Further, the protection atmosphere includes one of a noble gas atmosphere, and a vacuum atmosphere.

Further, the noble gas atmosphere includes at least one of nitrogen and argon.

Further, in the sintering process, a sintering temperature is 700°C-1200°C, and sintering time is 6-48 h.

In a second aspect, a lithium oxide material is provided by an embodiment of the present disclosure. The lithium oxide material is prepared by the preparation method of the first aspect.

In the following, the specific process and effect of the preparation method for the lithium oxide material of the present disclosure will be described in detail in conjunction with some specific embodiments, but are not limited to the scope of protection of the present disclosure.

### Embodiment 1

A lithium oxide material is prepared in this embodiment, specifically including the following steps:
(1) 6000 g of lithium carbonate, 917.07 g Super P and 231.79 g of glucose are weighed and added to a ball mill, then anhydrous ethanol is added as a dispersant, then the mixture is stirred for 30 min and then transferred to a sand mill for grinding to make a grinding particle size D50 of the slurry be 0.25 µm, so as to obtain a material a.
(2) The material a obtained in Step (1) is subjected to spray draying to obtain a material b, where the spray is conducted with an air inlet temperature of 220°C, and an air outlet temperature of 100°C.
(3) The material b obtained in Step (2) is sintered in an inertia atmosphere to obtain a material c, where a sintering temperature is 900°C, and sintering time is 24 h.
(4) The material obtained in Step (3) is subjected to jet pulverization to obtain a lithium oxide material.

### Embodiment 2

A lithium oxide material is prepared in this embodiment, specifically including the following steps:
(1) 6000 g of lithium carbonate, 937 g Super P and 678.96 g of polyethylene glycol are weighed and added to a ball mill, then anhydrous ethanol is added as a dispersant, then the mixture is stirred for 30 min and then transferred to a sand mill for grinding to make a grinding particle size D50 of the slurry be 0.32 µm, so as to obtain a material a.
(2) The material a obtained in Step (1) is subjected to spray draying to obtain a material b, where the spray is conducted with an air inlet temperature of 220°C, and an air outlet temperature of 100°C.
(3) The material b obtained in Step (2) is sintered in an inertia atmosphere to obtain a material c, where a sintering temperature is 810°C, and sintering time is 18 h.
(4) The material obtained in Step (3) is subjected to jet pulverization to obtain a lithium oxide material.

### Embodiment 3

A lithium oxide material is prepared in this embodiment, specifically including the following steps:
(1) 6000 g of lithium carbonate, 927.37 g of Ketjen Black and 632.56 g of polyethylene glycol are weighed and added to a ball mill, then anhydrous ethanol is added as a dispersant, then the mixture is stirred for 30 min and then transferred to a sand mill for grinding to make a grinding particle size D50 of the slurry be 0.27 µm, so as to obtain a material a.
(2) The material a obtained in Step (1) is subjected to spray draying to obtain a material b, where the spray is conducted with an air inlet temperature of 220°C, and an air outlet temperature of 100°C.
(3) The material b obtained in Step (2) is sintered in an inertia atmosphere to obtain a material c, where a sintering temperature is 750°C, and sintering time is 24 h.
(4) The material obtained in Step (3) is subjected to jet pulverization to obtain a lithium oxide material.

### Embodiment 4

A lithium oxide material is prepared in this embodiment, specifically including the following steps:
(1) 6000 g of lithium carbonate, 937.07 g Super P and 231.79 g of glucose are weighed and added to a ball mill, then anhydrous ethanol is added as a dispersant, then the mixture is stirred for 30 min and then transferred to a sand mill for grinding to make a grinding particle size D50 of the slurry be 0.23 µm, so as to obtain a material a.
(2) The material a obtained in Step (1) is subjected to spray draying to obtain a material b, where the spray is conducted with an air inlet temperature of 220°C, and an air outlet temperature of 100°C.
(3) The material b obtained in Step (2) is sintered in an inertia atmosphere to obtain a material c, where a sintering temperature is 900°C, and sintering time is 24 h.
(4) The material obtained in Step (3) is subjected to jet pulverization to obtain a lithium oxide material.

### Comparative example 1

A lithium oxide material is prepared in this Comparative example, specifically including the following steps:
(1) 500 g of lithium carbonate is weighed and sintered in an inertia atmosphere to obtain a material c, where a sintering temperature is 850°C, and sintering time is 36 h.
(2) The material c obtained in Step (1) is subjected to jet pulverization to obtain a lithium oxide material.

### Comparative example 2

A lithium oxide material is prepared in this Comparative example, specifically including the following steps:
(1) 6000 g of lithium carbonate and 960.32 g Super P are weighed and added to a ball mill, then anhydrous ethanol is added as a dispersant, then the mixture is stirred for 30 min and then transferred to a sand mill for grinding to make a grinding particle size D50 of the slurry be 0.33 µm, so as to obtain a material a.
(2) The material a obtained in Step (1) is subjected to spray draying to obtain a material b, where the spray is conducted with an air inlet temperature of 220°C, and an air outlet temperature of 100°C.
(3) The material b obtained in Step (2) is sintered in an inertia atmosphere to obtain a material c, where a sintering temperature is 850°C, and sintering time is 24 h.
(4) The material obtained in Step (3) is subjected to jet pulverization to obtain a lithium oxide material.

### Comparative example 3

A lithium oxide material is purchased.

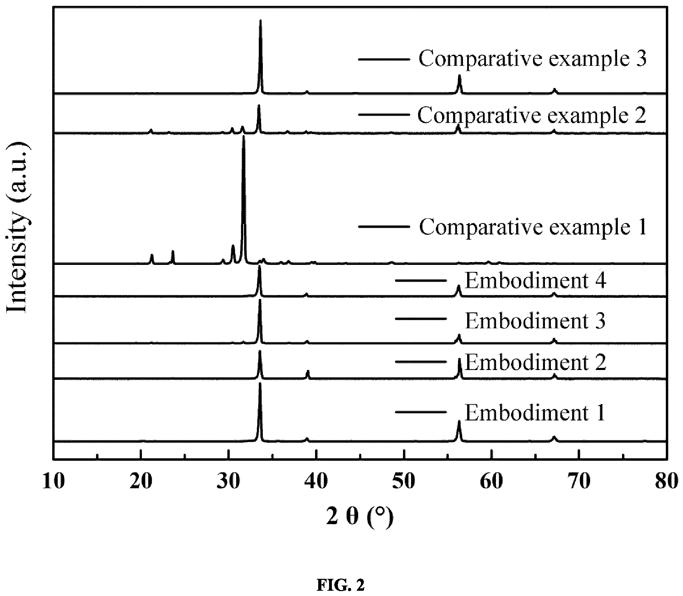

The lithium oxide materials of Embodiments 1-4 and Comparative Examples 1-3 are tested for carbon content, lithium content and XRD. The results of XRD pattern are shown in FIG. 2, and the results of carbon content, lithium content and related components determined by contrast standard cards are shown in Table 1.

**Table 1 Basic Physical and Chemical Indicators of Lithium Oxide Material**

| | Carbon content (wt.%) | Lithium content (wt.%) | XRD crystal type |
|---|---|---|---|
| Embodiment 1 | 0.1068 | 45.84 | Lithium oxide |
| Embodiment 2 | 0.1462 | 45.34 | Lithium oxide |
| Embodiment 3 | 0.3585 | 43.52 | Lithium oxide, Lithium carbonate |
| Embodiment 4 | 0.2682 | 44.89 | Lithium oxide |
| Comparative example 1 | 13.3715 | 21.96 | Lithium carbonate, Lithium oxide |
| Comparative example 2 | 0.5222 | 43.52 | Lithium oxide, Lithium carbonate |
| Comparative example 3 | 0.1191 | 45.11 | Lithium oxide |

As can be seen from above results, the purity of the lithium oxide materials prepared in Embodiments 1-4 is high, which is close to and even better than that of the purchased lithium oxide material.

Because the process route of this scheme is similar to the existing lithium iron phosphate process, the corresponding required equipment is basically the same. The process control is more mature, and thus can be used after simple transformation on the basis of the existing production line.

The scheme is based on carbothermal reduction of lithium carbonate, and the carbon generated by the decomposition of the carbon source reacts with lithium carbonate at high temperature to generated lithium oxide. the required raw materials only include lithium carbonate and carbon source.

This scheme is based on the carbothermal reduction of lithium carbonate, and the carbon generated by the decomposition of the carbon source reacts with lithium carbonate at high temperature to generated lithium oxide. The used carbon source is a composite carbon source, the inorganic carbon source, and a small molecular organic carbon source. The advantages are that the inorganic carbon source can be used as a reducing agent to participate in high-temperature thermal reduction of the lithium carbonate in large quantities, and the small molecular organic carbon source can generate a large amount of gas after high-temperature decomposition, which may promote the full reduction of lithium carbonate.

According to the preparation method for the lithium oxide material provided by the embodiment of the present disclosure, based on carbothermal reduction of lithium carbonate, a carbon source and a lithium carbonate are ground in liquid phase to obtain lithium source slurry, and then the lithium source slurry is subjected to spray drying, calcination and post-treatment to prepare lithium oxide. The lithium oxide material is high in purity and uniform in particle. In addition, the process route adopted by the method is similar to the existing lithium iron phosphate process route, and the required equipment is basically the same, such that the equipment requirements of the process is further reduced. The technical process of the preparation method for the lithium oxide material is simple, low in equipment requirement, and suitable for large-scale industrial production.

In the description of this specification, descriptions referring to the terms "one embodiment", "some embodiments", "examples", "specific examples" or "some examples" mean that specific features, structures, materials or characteristics described in connection with this embodiment or example are included in at least one embodiment or example of the present disclosure. In this specification, the schematic representations of the above terms are not necessarily aimed at the same embodiment or example. Moreover, specific features, structures, materials or characteristics described may be combined in any one or more embodiments or examples in a suitable manner. In addition, those skilled in the art can bind and combine different embodiments or examples and features of different embodiments or examples described in this specification without contradicting each other.

Although the embodiments of the present disclosure have been shown and described, those skilled in the art can understand that many changes, modifications, substitutions and variations can be made to these embodiments without departing from the principles and purposes of the present disclosure, and the scope of the present disclosure is defined by the claims and their equivalents.

## Claims

1. A preparation method for a lithium oxide material, comprising the following steps:
S10: mixing lithium carbonate, a carbon source and a dispersant according to a certain proportion, stirring and dispersing and carrying out wet-grinding to obtain an intermediate solution;
S20: carrying out spray drying on the intermediate solution to obtain an intermediate; and
S30: sintering and pulverizing the intermediate under a protection atmosphere to obtain the lithium oxide material.

2. The preparation method for a lithium oxide material according to claim 1, wherein the carbon source comprises an inorganic carbon source, and an organic carbon source.

3. The preparation method for a lithium oxide material according to claim 2, wherein the inorganic carbon source includes at least one of conductive carbon black, Super P, Ketjen black, carbon nanotubes, acetylene black, vapor-grown carbon fiber, graphene, and biomass carbon; and the organic carbon source comprises at least one of glucose, sucrose, starch, fructose, maltose, cyclodextrin, citric acid, polyethylene glycol, polyvinyl alcohol, and polyglycerol.

4. The preparation method for a lithium oxide material according to claim 1, wherein the dispersant comprises one of deionized water, and anhydrous ethanol.

5. The preparation method for a lithium oxide material according to claim 1, wherein a grinding particle size D50 of the wet grinding is 0.1 µm to 1.0 µm.

6. The preparation method for a lithium oxide material according to claim 1, wherein in the spray drying process, the spray is conducted with an air inlet temperature of 200-280°C, and an air outlet temperature of 90-120°C.

7. The preparation method for a lithium oxide material according to claim 1, wherein the protection atmosphere comprises one of a noble gas atmosphere, and a vacuum atmosphere.

8. The preparation method for a lithium oxide material according to claim 7, wherein the noble gas atmosphere comprises at least one of nitrogen and argon.

9. The preparation method for a lithium oxide material according to claim 8, wherein in the sintering process, a sintering temperature is 700°C-1200°C, and sintering time is 6-48 h.

10. A lithium oxide material, wherein the lithium oxide material is prepared by the preparation method according to any one of claims 1 to 9.

## Amended claims

### Amended claims in accordance with Rule 137(2) EPC.

1. A preparation method for a lithium oxide material, comprising the following steps:
S10: mixing lithium carbonate, a carbon source and a dispersant according to a certain proportion, stirring and dispersing and carrying out wet-grinding to obtain an intermediate solution;
S20: carrying out spray drying on the intermediate solution to obtain an intermediate; and
S30: sintering and pulverizing the intermediate under a protection atmosphere to obtain the lithium oxide material.

2. The preparation method for a lithium oxide material according to claim 1, wherein the carbon source comprises an inorganic carbon source, and an organic carbon source.

3. The preparation method for a lithium oxide material according to claim 2, wherein the inorganic carbon source includes at least one of conductive carbon black, Super P, Ketjen black, carbon nanotubes, acetylene black, vapor-grown carbon fiber, graphene, and biomass carbon; and the organic carbon source comprises at least one of glucose, sucrose, starch, fructose, maltose, cyclodextrin, citric acid, polyethylene glycol, polyvinyl alcohol, and polyglycerol.

4. The preparation method for a lithium oxide material according to claim 1, wherein the dispersant comprises one of deionized water, and anhydrous ethanol.

5. The preparation method for a lithium oxide material according to claim 1, wherein a grinding particle size D50 of the wet grinding is 0.1 µm to 1.0 µm.

6. The preparation method for a lithium oxide material according to claim 1, wherein in the spray drying process, the spray is conducted with an air inlet temperature of 200-280°C, and an air outlet temperature of 90-120°C.

7. The preparation method for a lithium oxide material according to claim 1, wherein the protection atmosphere comprises one of a noble gas atmosphere, and a vacuum atmosphere.

8. The preparation method for a lithium oxide material according to claim 7, wherein the noble gas atmosphere comprises at least one of nitrogen and argon.

9. The preparation method for a lithium oxide material according to claim 8, wherein in the sintering process, a sintering temperature is 700°C-1200°C, and sintering time is 6-48 h.
